# EUROPÄISCHE PATENTSCHRIFT

(11) **EP 1 065 224 B1**
(45) Veröffentlichungstag und Bekanntmachung des Hinweises auf die Patenterteilung: **28.11.2001**
(21) Anmeldenummer: 00111074.1
(22) Anmeldetag: 02.06.2000
(51) Int. Cl.: C08F 20/12

(54) **Verfahren zur Herstellung von Polyvinylalkohol-stabilisierten Polymerisaten**
Process for preparing polyvinylalcohol stabilised polymers
Procédé de préparation de polymères stabilisés par l'alcool polyvinylique

(30) Priorität: 24.06.1999 DE 19928933
(43) Veröffentlichungstag der Anmeldung: 03.01.2001
(73) Patentinhaber: Wacker Polymer Systems GmbH & Co. KG, 84489 Burghausen (DE)
(72) Erfinder: Weitzel, Hans-Peter, Dr., 84571 Reischach (DE)
(74) Vertreter: Schuderer, Michael, Dr.

(56) Entgegenhaltungen:
- EP-A- 0 007 042
- EP-A- 0 718 314
- EP-A- 0 821 016
- GB-A- 2 049 712

## Beschreibung

Die Erfindung betrifft ein Verfahren zur Herstellung von Polyvinylalkohol-stabilisierten Polymerisaten auf Basis von (Meth)acrylatmonomeren in Form deren wässrigen Dispersionen und in Wasser redispergierbaren Dispersionspulver.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (z.B. Haftzugswerte im Fliesenkleber) beiträgt. Als Monomere zur Herstellung von redispergierbaren Pulvern werden bevorzugt Vinylester und Ethylen eingesetzt, da die Stabilisierung von Acrylatcopolymeren bzw. Styrolacrylatcopolymeren durch Polyvinylalkohol nicht so einfach zu bewerkstelligen ist. Insbesondere ist es nicht trivial eine Acrylatdispersion alleinig mit Polyvinylalkohol so zu stabilisieren, daß die daraus resultierenden Pulver block- bzw. lagerstabil sind. In der Regel wird zur Erzielung einer handhabbaren Dispersionsviskosität zusätzlich Regler zur Herabsenkung des Molekulargewichtes eingesetzt, was wiederum die Blockstabilität des Pulvers erheblich beeinträchtigt.

Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität); denn es ist einem Anwender nicht zuzumuten, daß er innerhalb einer kurzen Zeitspanne eine neue Mischung anrühren muß. In der Beton- und Mörtelindustrie spielen darüberhinaus die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend frost-taustabil. Die mit dem Dispersionspulver vergüteten hydraulisch abbindenden Systeme sollen zudem noch bessere Haftung gegenüber den unvergüteten Systemen erbringen.

Aus der EP-B 718314 ist ein Verfahren zur Herstellung von mit Schutzkolloid stabilisierten Polymerdispersionen bekannt, wobei so vorgegangen wird, daß mindestens 50 Gew.-% der Monomere und bis zu 50 Gew.-% des Initiators vor dem Start der Polymerisation vorgelegt werden, und der Rest kontinuierlich dosiert wird. Der Initiator wird in den üblichen Mengen von 0.05 bis 1.0 Gew.-%, bezogen auf Monomer, eingesetzt.

In der EP-A 812863 wird ein Verfahren zur Herstellung von mit Polyvinylalkohol stabilisierten Polymerdispersionen auf Basis von Acrylatmonomer beansprucht, wobei zur Stabilisierung vollverseifte Polyvinylalkohole mit definiertem niederem Molekulargewicht eingesetzt werden, und die Polymerisation zwingend in Anwesenheit von Reglern durchgeführt wird. Die Monomere und der Initiator werden teilweise vorgelegt und teilweise zudosiert.

In der EP-A 821016 wird zur Herstellung von schutzkolloidstabilisierten Polymerdispersionen die Copolymerisation größerer Mengen an Hydroxyalkyacrylate empfohlen. Dadurch werden die erhaltenen Produkte deutlich wasseranfälliger als gewünscht. Zur Polymerisation wird die Oxidationskomponente des Redoxinitiators vollständig vorgelegt und die Monomere sowie das Reduktionsmittel kontinuierlich zudosiert.

In der EP-A 671420 werden wässrige, mit Schutzkolloid stabilisierte Dispersionen von Acrylatpolymerisaten mit verbesserter Wasserfestigkeit beansprucht, welche durch Polymerisation in Gegenwart einer Mischung aus Polyvinylalkohol und Hydroxethylcellulose erhalten werden. Das darin beschriebene Herstellungsverfahren unter Zudosierung der gesamten Monomermenge führt nur mit dieser speziellen Mischung zu brauchbaren Produkten.

Der Erfindung lag somit die Aufgabe zugrunde, eine stabile, niederviskose, Polyvinylalkohol-stabilisierte Dispersion und entsprechende in Wasser redispergierbare Dispersionspulver auf Basis von Acrylatmonomeren zur Verfügung zu stellen, die beim Einsatz in zementären Anwendungen eine voll befriedigende Viskositäts- bzw. Zementstabilität besitzen und das Zementabbinden nicht behindern.

Üblicherweise werden Emulsionspolymerisationen bei hohem Umsatz, das heißt monomerarm geführt, um eine neue Nukleirung von Teilchen zu vermeiden. Überraschenderweise wurde nun gefunden, daß nur der umgekehrte Weg zum Ziel führt: Die Polymerisation muß mit sehr geringen Initiatormengen, unter vollständiger Dosierung des Initiators mit einem Dosiergradienten durchgeführt werden, das heißt in der ersten Polymerisationsphase sehr monomerreich durchgeführt werden, um eine stippen- und koagulatfreie Dispersion mit den gewünschten Eigenschaften wie gute Zementstabilität und Blockstabilität der resultierenden Pulver zu erhalten.

Gegenstand der Erfindung ist ein Verfahren zur Herstellung von mit Polyvinylalkoholen stabilisierten Polymerisaten auf Basis von (Meth)acrylatmonomeren in Form deren wässrigen Dispersionen und in Wasser redispergierbaren Dispersionspulver mittels radikalisch initiierter Emulsionspolymerisation oder Suspensionspolymerisation von einem oder mehreren Monomeren aus der Gruppe der Ester der Acrylsäure oder Methacrylsäure und gegebenenfalls weiteren damit copolymerisierbaren Monomeren, in Gegenwart von einem oder mehreren Schutzkolloiden aus der Gruppe der Polyvinylalkohole, und gegebenenfalls Trocknung der damit erhaltenen wässrigen Dispersion, dadurch gekennzeichnet, daß
a) in Gegenwart von 0.001 bis 0.02 Gew.-% Initiator, gegebenenfalls noch 0.001 bis 0.03 Gew.-% Reduktionsmittel, jeweils bezogen auf das Gesamtgewicht der Monomere, polymerisiert wird, und
b) 10 bis 50 Gew.-% der Monomere, bezogen auf das Gesamtgewicht der Monomere, vorgelegt und der Rest zudosiert wird, und
c) der Initiator sowie gegebenenfalls das Reduktionsmittel insgesamt zudosiert werden, wobei bis zum Ablauf eines Zeitraums der von 50 bis 80 % der gesamten Polymerisationszeit beträgt 25 bis 60 Gew.-% der gesamten Initiatormenge und gegebenenfalls Reduktionsmittelmenge kontinuierlich zudosiert werden, und
d) in der verbleibenden Polymerisationszeit die Restmenge an Initiator und gegebenenfalls Reduktionsmittel beschleunigt mit mindestens doppelt so hoher Dosierrate wie in Schritt c) zugegeben wird.

Geeignete Monomeren aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Gegebenenfalls können die Methacrylsäureester und Acrylsäureester noch mit weiteren Monomeren copolymerisiert werden, beispielsweise mit einem oder mehreren Monomeren aus der Gruppe der Vinylester von unverzweigten oder verzweigten Carbonsäuren mit 1 bis 12 C-Atomen, der Vinylaromaten, der Vinylhalogenide, der Olefine und Diene. Falls die genannten Monomere copolymerisiert werden, dann im allgemeinen in einer Menge von 10 bis 70 Gew.-%, bezogen auf das Gesamtgewicht der Monomere.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat. Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat.

Am meisten bevorzugt werden Homo- und Copolymerisate, welche ein oder mehrere Monomere aus der Gruppe Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat enthalten, insbesondere Homopolymerisate von n-Butylacrylat oder 2-Ethylhexylacrylat oder Copolymerisate von Methylmethacrylat mit n-Butylacrylat und/oder 2-Ethylhexylacrylat; sowie Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Homo- und Copolymerisate gegebenenfalls noch die obengenannten Hilfsmonomere enthalten können.

Die Monomerauswahl bzw. die Auswahl der Gewichtsanteile der Comonomere erfolgt dabei so, daß im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Polyvinylalkohole sind teilverseifte oder vollverseifte Polyvinylalkohole. Bevorzugt sind teilverseifte Polyvinylalkohole mit einem Hydrolysegrad von 80 bis 95 Mol% und einer Höpplerviskosität, in 4 %-iger wässriger Lösung von 1 bis 30 mPas (Methode nach Höppler bei 20°C, DIN 53015). Geeignet sind auch teilverseifte, hydrophob modifizierte Polyvinylalkohole mit einem Hydrolysegrad von 80 bis 95 Mol% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere geeignete Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol%, vorzugsweise 85 bis 94 Mol%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol% und einer Höpplerviskosität, in 4 %-iger wässriger Lösung von 3 bis 15 mPas (Methode nach Höppler bei 20°C, DIN 53015. Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können insgesamt zudosiert werden oder in Anteilen vorgelegt werden und der Rest nach der Initiierung der Polymerisation zudosiert werden. Vorzugsweise wird so vorgegangen, daß 10 bis 50 Gew.-%, bezogen auf das Gesamtgewicht der Monomere, vorgelegt wird und der Rest zudosiert wird. Im allgemeinen wird der Rest der Monomere innerhalb von 4 Stunden, vorzugsweise innerhalb 3 Stunden zudosiert. Die Dosierungen können separat (räumlich und zeitlich) durchgeführt werden oder die zu dosierenden Komponenten können alle oder teilweise voremulgiert dosiert werden.

Der Monomerumsatz wird mit der Initiatordosierung gesteuert. Die Initiatoren werden insgesamt zudosiert, wobei zur Einstellung der obengenannten Umsatzraten in der ersten Phase der Polymerisation die Initiatordosierung relativ langsam und in der Endphase der Polymerisation mit deutlich erhöhter Dosierrate ausgeführt wird. Im allgemeinen werden in der ersten Phase der Polymerisation, das heißt bis zum Ablauf eines Zeitraums der zwischen 50 bis 80 %, vorzugsweise 70 bis 80 % der Polymerisationszeit beträgt, 25 bis 60 %, vorzugsweise 50 bis 60 % der gesamten Initiatormenge, zudosiert und in der verbleibenden Polymerisationszeit die Restmenge an Initiator beschleunigt, vorzugsweise mit mindestens doppelt so hoher, vorzugsweise 3-fach bis 8-fach erhöhter Dosierrate, zugegeben.

Die Polymerisation wird mit diesen Maßnahmen so ausgeführt, daß der Monomerumsatz nach 30 Minuten Polymerisationszeit maximal 70 %, nach 60 Minuten Polymerisationszeit maximal 75 %, nach 90 Minuten Polymerisationszeit maximal 80 %, nach 120 Minuten Polymerisationszeit maximal 85 %, nach 150 Minuten Polymerisationszeit maximal 88 %, nach 180 Minuten Polymerisationszeit maximal 90 % beträgt, jeweils bezogen auf die Gesamtmenge an Monomer, welche bis zu diesem Zeitpunkt vorgelegt oder zudosiert worden ist.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben. Ferner als Alleinbindemittel für Beschichtungsmittel und Klebemittel oder als Beschichtungs- bzw. Bindemittel für Textilien und Papier.

Die nachfolgenden Beispiele dienen der weiteren Erläuterung der Erfindung:

### Beispiel 1:

In ein Polymerisationsgefäß mit 12 Liter Volumen wurden 2230 g Wasser, 2380 g einer 20 %-igen, wässrigen Lösung eines Polyvinylalkohols mit einem Hydrolysegrad von 88 Mol-% und einer Viskosität nach Höppler von 4 mPas, 10 g Eisenammoniumsulfat (1 %-ig in Wasser) sowie 1050 g Butylacrylat und 617 g Methylmethacrylat vorgelegt und auf 70°C erwärmt. Anschließend wurden tert.-Butylhydroperoxid (0.1 %-ig in Wasser) und Brüggolit (Natriumhydroxymethansulfinat) (0.15 %-ig in Wasser) kontinuierlich mit je 10 g/h zudosiert. Ab Polymerisationsbeginn, erkennbar an dem Anstieg der Innentemperatur, wurde das restliche Monomergemisch bestehend aus 1950 g Butylacrylat und 1150 g Methylmethacrylat kontinuierlich in 3.5 h mit 885 g/h zudosiert. 3 h nach Reaktionsbeginn wurde die Initiatordosierrate innerhalb von 1 h kontinuierlich bis auf 60 g/h erhöht. Es wurde polymerisiert bis keine Polymerisationswärme mehr beobachtet werden konnte. Zur Entfernung von Restmonomer wurde nach dem Abkühlen auf 30°C mit 10 g tert.-Butylhydroperoxid (10 %-ig in Wasser) und 20 g Brüggolit (10 %-ig in Wasser) nachpolymerisiert.

Die Umsatzentwicklung war folgendermaßen:

| Zeit (min) | Festgehalt (%) | Monomerumsatz (%) |
|---|---|---|
| 0* | 14.3 | 41.93 |
| 30 | 25.1 | 65.38 |
| 60 | 29.1 | 69.06 |
| 90 | 33.2 | 73.07 |
| 120 | 36.5 | 75.47 |
| 150 | 39.4 | 77.28 |
| 180 | 42.4 | 79.49 |
| Ende | 53.7 | 100 |

| | | |
|---|---|---|
| * Als Zeitpunkt 0 ist der Zeitpunkt definiert an dem mit der Monomerdosierung begonnen wird. | | |

Man erhielt eine Dispersion mit einem Feststoffgehalt von 53.7 %, einer Viskosität von 680 mPas (Brookfield 20 bei 23°C), einem pH-Wert von 4.3 und einem Teilchengrößendurchmesser Dw von 800 nm. Der Siebrückstand beim Sieben über 250 um betrug 2 g. Das freie Restmonomer betrug < 100 ppm. Die Dispersion war im Zement stabil.

### Beispiel 2:

In ein Polymerisationsgefäß mit 12 Liter Volumen wurden 2590 g Wasser, 2450 g einer 20 %-igen, wässrigen Lösung eines Polyvinylalkohols mit einem Hydrolysegrad von 88 Mol-% und einer Viskosität nach Höppler von 4 mPas, 10 g Eisenammoniumsulfat (1 %-ig in Wasser) sowie 980 g Styrol und 1470 g 2-Ethylhexylacrylat vorgelegt und auf 70°C erwärmt. Anschließend wurden tert.-Butylhydroperoxid (0.1 %-ig in Wasser) und Brüggolit (Natriumhydroxymethansulfinat) (0.15 %-ig in Wasser) kontinuierlich mit je 50 g/h zudosiert. Ab Polymerisationsbeginn, erkennbar an dem Anstieg der Innentemperatur, wurde das restliche Monomergemisch bestehend aus 980 g Styrol und 1470 g 2-Ethylhexylacrylat kontinuierlich in 2.5 h mit 980 g/h zudosiert. 3 h nach Reaktionsbeginn wurde die Initiatordosierrate innerhalb von 1 h kontinuierlich bis auf 100 g/h erhöht. Es wurde polymerisiert bis keine Polymerisationswärme mehr beobachtet werden konnte. Zur Entfernung von Restmonomer wurde nach dem Abkühlen auf 30°C mit 10 g tert.-Butylhydroperoxid (10 %-ig in Wasser) und 20 g Brüggolit (10 %-ig in Wasser) nachpolymerisiert.

Die Umsatzentwicklung war folgendermaßen:

| Zeit (min) | Festgehalt (%) | Monomerumsatz (%) |
|---|---|---|
| 0* | 24.8 | 63.18 |
| 30 | 29.8 | 69.79 |
| 60 | 34.2 | 74.77 |
| 90 | 36.5 | 75.40 |
| 120 | 40.0 | 78.78 |
| 150 | 45.4 | 85.04 |
| 180 | 46.6 | 85.83 |
| Ende | 51.0 | 100 |

| | | |
|---|---|---|
| * Als Zeitpunkt 0 ist der Zeitpunkt definiert an dem mit der Monomerdosierung begonnen wird. | | |

Man erhielt eine Dispersion mit einem Feststoffgehalt von 51.0 %, einer Viskosität von 3000 mPas (Brookfield 20 bei 23°C), einem pH-Wert von 4.1 und einem Teilchengrößendurchmesser Dw von 750 nm. Der Siebrückstand beim Sieben über 250 µm betrug 3 g. Das freie Restmonomer betrug < 50 ppm. Die Dispersion war im Zement stabil.

### Beispiel 3:

In ein Polymerisationsgefäß mit 12 Liter Volumen wurden 1330 g Wasser, 1430 g einer 20 %-igen, wässrigen Lösung eines Polyvinylalkohols mit einem Hydrolysegrad von 88 Mol-% und einer Viskosität nach Höppler von 4 mPas, 950 g einer 20 %-igen wässrigen Lösung eines hydrophob modifizierten Polyvinylalkohol mit einem Hydrolysegrad von 88 Mol-% und einer Viskosität nach Höppler von 4 mPas, 10 g Eisenammoniumsulfat (1 %-ig in Wasser) sowie 1170 g Butylacrylat und 500 g Methylmethacrylat vorgelegt und auf 70°C erwärmt. Anschließend wurden tert.-Butylhydroperoxid (0.1 %-ig in Wasser) und Brüggolit (Natriumhydroxymethansulfinat) (0.15 %-ig in Wasser) kontinuierlich mit je 30 g/h zudosiert. Ab Polymerisationsbeginn, erkennbar an dem Anstieg der Innentemperatur, wurde das restliche Monomergemisch bestehend aus 2160 g Butylacrylat und 928 g Methylmethacrylat kontinuierlich in 3.5 h mit 880 g/h zudosiert. 3 h nach Reaktionsbeginn wurde die Initiatordosierrate innerhalb von 1 h kontinuierlich bis auf 100 g/h erhöht. Es wurde polymerisiert bis keine Polymerisationswärme mehr beobachtet werden konnte. Zur Entfernung von Restmonomer wurde nach dem Abkühlen auf 30°C mit 10 g tert.-Butylhydroperoxid (10 %-ig in Wasser) und 20 g Brüggolit (10 %-ig in Wasser) nachpolymerisiert.

Die Umsatzentwicklung war folgendermaßen:

| Zeit (min) | Festgehalt (%) | Monomerumsatz (%) |
|---|---|---|
| 0* | 10.8 | 27.08 |
| 30 | 23.9 | 54.07 |
| 60 | 29.9 | 62.45 |
| 90 | 35.0 | 68.57 |
| 120 | 39.5 | 73.42 |
| 150 | 43.8 | 77.90 |
| 180 | 44.8 | 76.76 |
| Ende | 56.0 | 100 |

| | | |
|---|---|---|
| * Als Zeitpunkt 0 ist der Zeitpunkt definiert an dem mit der Monomerdosierung begonnen wird. | | |

Man erhielt eine Dispersion mit einem Feststoffgehalt von 56.0 %, einer Viskosität von 1440 mPas (Brookfield 20 bei 23°C), einem pH-Wert von 4.1 und einem Teilchengrößendurchmesser Dw von 750 nm. Der Siebrückstand beim Sieben über 250 µm betrug 2 g. Das freie Restmonomer betrug < 50 ppm. Die Dispersion war im Zement stabil.

### Vergleichsbeispiel 4:

In ein Polymerisationsgefäß mit 12 Liter Volumen wurden 2460 g Wasser, 1420 g einer 20 %-igen, wässrigen Lösung eines Polyvinylalkohols mit einem Hydrolysegrad von 88 Mol-% und einer Viskosität nach Höppler von 4 mPas, 950 g einer 20 %-igen, wässrigen Lösung eines hydrophob modifizierten Polyvinylalkohols mit einem Hydrolysegrad von 88 Mol-% und einer Viskosität nach Höppler von 4 mPas, 10 g Eisenammoniumsulfat (1 %-ig in Wasser) sowie 1490 g Butylacrylat und 880 g Methylmethacrylat vorgelegt und auf 70°C erwärmt. Anschließend wurden tert.-Butylhydroperoxid (1.0 %-ig in Wasser) und Brüggolit (Natriumhydroxymethansulfinat) (1.5 %-ig in Wasser) kontinuierlich mit je 10 g/h zudosiert. Ab Polymerisationsbeginn, erkennbar an dem Anstieg der Innentemperatur, wurde das restliche Monomergemisch bestehend aus 1490 g Butylacrylat und 928 g Methylmethacrylat kontinuierlich in 3.5 h mit 880 g/h zudosiert. 3 h nach Reaktionsbeginn wurde die Initiatordosierrate innerhalb von 1 h kontinuierlich bis auf 50 g/h erhöht. Es wurde polymerisiert bis keine Polymerisationswärme mehr beobachtet werden konnte. Zur Entfernung von Restmonomer wurde nach dem Abkühlen auf 30°C mit 10 g tert.-Butylhydroperoxid (10 %-ig in Wasser) und 20 g Brüggolit (10 %-ig in Wasser) nachpolymerisiert.

Die Umsatzentwicklung war folgendermaßen:

| Zeit (min) | Festgehalt (%) | Monomerumsatz (%) |
|---|---|---|
| 0* | 29.7 | 75.19 |
| 30 | 34.3 | 81.30 |
| 60 | 41.4 | 92.74 |
| 90 | 44.1 | 94.04 |
| 120 | 45.5 | 92.93 |
| 150 | 47.3 | 92.98 |
| 180 | 48.1 | 91.38 |
| Ende | 50.9 | 100 |

| | | |
|---|---|---|
| * Als Zeitpunkt 0 ist der Zeitpunkt definiert an dem mit der Monomerdosierung begonnen wird. | | |

Man erhielt eine Dispersion mit einem Feststoffgehalt von 50.9 %, einer Viskosität von 3300 mPas (Brookfield 20 bei 23°C), einem pH-Wert von 4.1 und einem Teilchengrößendurchmesser Dw von 1150 nm. Der Siebrückstand beim Sieben über 250 µm betrug 45 g. Das freie Restmonomer betrug < 100 ppm. Die Dispersion koagulierte im Zement.

### Pulverherstellung:

Die Dispersionen aus den Beispielen 1 bis 3 und Vergleichsbeispiel 4 wurden mit 5 Gew.-% (fest/fest) Polyvinylalkohol mit einem Hydrolysegrad von 88 Mol% und einer Viskosität nach Höppler von 4 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Redispergierverhalten der Polymerfilme:

Aus den Dispersionen der genannten Beispielen (vor Sprühtrocknung) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.

Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

Bestimmung des Absitzverhaltens der Pulver (Röhrenabsitz): Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung der Zementstabilität:

Es wurde eine Zementmischung der nachfolgenden Rezeptur angerührt:

| | |
|---|---|
| Portlandzement | 82.5 g |
| Calcit (CaCO)₃ 10-40 mm | 75 g |
| Quarzsand 200-500 mm | 142 g |
| Dispersionspulver | 14.5 g |
| Wasser | 85 g |

Die Verarbeitbarkeit der Zementmischung wurde über einen Zeitraum von 2 Stunden beobachtet und qualitativ beurteilt.

Die Prüfergebnisse sind in Tabelle 1 zusammengefaßt.

**Tabelle 1 :**

| Bsp. | Redispergierbarkeit | Röhrenabsitz [cm] | Blockfestigkeit | Zementstabilität |
|---|---|---|---|---|
| Bsp. 1 | 1 | 1.5 | 1 | Stabil |
| Bsp. 2 | 1 | 2.0 | 1 - 2 | Stabil |
| Bsp. 3 | 1 | 1.0 | 1 | Stabil |
| V.bsp. 4 | 2 | 5.5 | 4 | Koaguliert |

Mit der erfindungsgemäßen Verfahrensweise können deutliche Verbesserungen in der Block- und somit Lagerstabilität der Pulver erzielt werden. Außerdem ist die Redispergierbarkeit und die Zementstabilität deutlich verbessert.

## Patentansprüche

1. Verfahren zur Herstellung von mit Polyvinylalkoholen stabilisierten Polymerisaten auf Basis von (Meth)acrylatmonomeren in Form deren wässrigen Dispersionen und in Wasser redispergierbaren Dispersionspulver mittels radikalisch initiierter Emulsionspolymerisation oder Suspensionspolymerisation von einem oder mehreren Monomeren aus der Gruppe der Ester der Acrylsäure oder Methacrylsäure und gegebenenfalls weiteren damit copolymerisierbaren Monomeren, in Gegenwart von einem oder mehreren Schutzkolloiden aus der Gruppe der Polyvinylalkohole, und gegebenenfalls Trocknung der damit erhaltenen wässrigen Dispersion, **dadurch gekennzeichnet, daß**
a) in Gegenwart von 0.001 bis 0.02 Gew.-% Initiator, gegebenenfalls noch 0.001 bis 0.03 Gew.-% Reduktionsmittel, jeweils bezogen auf das Gesamtgewicht der Monomere, polymerisiert wird, und
b) 10 bis 50 Gew.-% der Monomere, bezogen auf das Gesamtgewicht der Monomere, vorgelegt und der Rest zudosiert wird, und
c) der Initiator sowie gegebenenfalls das Reduktionsmittel insgesamt zudosiert werden, wobei bis zum Ablauf eines Zeitraums der von 50 bis 80 % der gesamten Polymerisationszeit beträgt 25 bis 60 Gew.-% der gesamten Initiatormenge und gegebenenfalls Reduktionsmittelmenge kontinuierlich zudosiert werden, und
d) in der verbleibenden Polymerisationszeit die Restmenge an Initiator und gegebenenfalls Reduktionsmittel beschleunigt mit mindestens doppelt so hoher Dosierrate wie in Schritt c) zugegeben wird.

2. Verfahren gemäß Anspruch 1, **dadurch gekennzeichnet, daß** in Schritt c) die Zudosierung des Initiators und gegebenenfalls des Reduktionsmittels bis zum Ablauf eines Zeitraums von 70 bis 80 % der gesamten Polymerisationszeit erfolgt.

3. Verfahren gemäß Anspruch 1 oder 2, **dadurch gekennzeichnet, daß** in Schritt d) die Restmenge an Initiator und gegebenenfalls Reduktionsmittel beschleunigt mit 3-fach bis 8-fach erhöhter Dosierrate wie in Schritt c) zugegeben wird.

4. Verfahren gemäß Anspruch 1 bis 3, **dadurch gekennzeichnet, daß** die Monomeren und Radikalinitiatoren so zudosiert werden, daß der Monomerumsatz
nach 30 Minuten Polymerisationszeit maximal 70 %,
nach 60 Minuten Polymerisationszeit maximal 75 %,
nach 90 Minuten Polymerisationszeit maximal 80 %,
nach 120 Minuten Polymerisationszeit maximal 85 %,
nach 150 Minuten Polymerisationszeit maximal 88 %,
nach 180 Minuten Polymerisationszeit maximal 90 %
beträgt, jeweils bezogen auf die Gesamtmenge an Monomer, welche bis zu diesem Zeitpunkt vorgelegt oder zudosiert worden ist.

5. Verfahren nach Anspruch 1 bis 4, **dadurch gekennzeichnet, daß** teilverseifte Polyvinylalkohole oder teilverseifte, hydrophob modifizierte Polyvinylalkohole mit jeweils einem Hydrolysegrad von 80 bis 95 Mol% und einer Höpplerviskosität, in 4 %-iger wässriger Lösung von 1 bis 30 mPas (Methode nach Höppler bei 20°C, DIN 53015) oder deren Gemische eingesetzt werden.

6. Verfahren nach Anspruch 5, **dadurch gekennzeichnet, daß** teilverseifte Polyvinylalkohole mit einem Hydrolysegrad von 85 bis 94 Mol% und einer Höpplerviskosität, in 4 %-iger wässriger Lösung von 3 bis 15 mPas (Methode nach Höppler bei 20°C, DIN 53015 eingesetzt werden.

7. Verfahren nach Anspruch 1 bis 6, **dadurch gekennzeichnet, daß** mindestens 5 Gew.-% des Schutzkolloidanteils vorgelegt werden und der Rest zudosiert wird.

8. Verfahren nach Anspruch 1 bis 7, **dadurch gekennzeichnet, daß** die Trocknung der damit erhaltenen wässrigen Dispersion mittels Sprühtrocknung, gegebenenfalls nach Zugabe weiterer Schutzkolloide als Verdüsungshilfe, erfolgt.

9. Verwendung der Verfahrensprodukte gemäß Anspruch 1 bis 8 als Rezepturbestandteil in Verbindung mit anorganischen, hydraulisch abbindenden Bindemitteln in Bauklebern, Putzen, Spachtelmassen, Fußbodenspachtelmassen, Fugenmörtel und Farben.

10. Verwendung der Verfahrensprodukte gemäß Anspruch 1 bis 8 als Alleinbindemittel für Beschichtungsmittel und Klebemittel.

11. Verwendung der Verfahrensprodukte gemäß Anspruch 1 bis 8 als Beschichtungs- und Bindemittel für Textilien und Papier.

## Claims

1. Process for preparing polyvinyl alcohol-stabilized addition polymers based on (meth)acrylate monomers in the form of their aqueous dispersions and water-redispersible dispersion powders by means of free-radically initiated emulsion polymerization or suspension polymerization of one or more monomers selected from the group consisting of the esters of acrylic acid and methacrylic acid and, if desired, further monomers copolymerizable therewith in the presence of one or more protective colloids from the group of the polyvinyl alcohols and, if appropriate, with drying of the resultant aqueous dispersion, which is **characterized in that** it comprises
a) conducting polymerization in the presence of from 0.001 to 0.02% by weight of initiator and, if desired, from 0.001 to 0.03% by weight of reducing agent, based in each case on the overall weight of the monomers, and
b) including from 10 to 50% by weight of the monomers, based on the overall weight of the monomers, in the initial charge and metering in the rest, and
c) metering in the initiator and, if present, the reducing agent in toto, from 25 to 60% by weight of the total amount of initiator and, if present of reducing agent being metered in continuously until from 50 to 80% of the total polymerization time has elapsed, and
d) in the remaining polymerization time, adding the remaining amount of initiator and, if present, reducing agent at an accelerated metering rate which is at least twice as high as in step c).

2. Process according to Claim 1, **characterized in that** the metering of the initiator and, if appropriate, of the reducing agent in step c) takes place until from 70 to 80% of the total polymerization time has elapsed.

3. Process according to Claim 1 or 2, **characterized in that** the remainder of initiator and, if present, reducing agent is added in step d) at an accelerated metering rate which is higher by a factor of from 3 to 8 than in step c).

4. Process according to any of Claims 1 to 3, **characterized in that** the monomers and free-radical initiators are metered in such that the monomer conversion
after 30 minutes of polymerization time is not more than 70%,
after 60 minutes of polymerization time is not more than 75%,
after 90 minutes of polymerization time is not more than 80%,
after 120 minutes of polymerization time is not more than 85%,
after 150 minutes of polymerization time is not more than 88%,
after 180 minutes of polymerization time is not more than 90%,
based in each case on the total amount of monomer introduced initially or metered in up to this point in time.

5. Process according to any of Claims 1 to 4, **characterized in that** partly hydrolysed polyvinyl alcohols or partly hydrolysed hydrophobically modified polyvinyl alcohols having in each case a degree of hydrolysis of from 80 to 95 mol% and a Höppler viscosity in 4% strength aqueous solution of from 1 to 30 mPas (method according to Höppler at 20°C, DIN 53015) or mixtures thereof are used.

6. Process according to Claim 5, **characterized in that** partly hydrolysed polyvinyl alcohols having a degree of hydrolysis of 85 to 94 mol% and a Höppler viscosity in 4% strength aqueous solution of from 3 to 15 mPas (method according to Höppler at 20°C, DIN 53015) are used.

7. Process according to any of claims 1 to 6, **characterized in that** at least 5% by weight of the protective colloid fraction is included in the initial charge and the rest is metered in.

8. Process according to any of Claims 1 to 7, **characterized in that** the aqueous dispersion obtained thereby is dried by means of spray drying, with or without addition of further protective colloids as spraying aids.

9. Use of the products of the process according to any of Claims 1 to 8 as a formulation constituent in conjunction with inorganic hydraulically setting binders in construction adhesives, plasters and renders, grouting compositions, floor-filling compositions, jointing mortars, and paints.

10. Use of the products of the process according to any of Claims 1 to 8 as sole binders for coating compositions and adhesives.

11. Use of the products of the process according to any of Claims 1 to 8 as coating compositions and binders for textiles and paper.

## Revendications

1. Procédé pour la préparation de polymères à base de monomères (méth)acrylate, stabilisés avec des poly(alcool vinylique)s, sous forme de leurs dispersions aqueuses et de poudres pour dispersion redispersables dans l'eau, par polymérisation en suspension ou polymérisation en émulsion à amorçage radicalaire d'un ou plusieurs monomères choisis dans le groupe des esters de l'acide acrylique ou méthacrylique et éventuellement d'autres monomères copolymérisables avec ceux-ci, en présence d'un ou plusieurs colloïdes protecteurs choisis dans le groupe des poly(alcool vinylique)s, et éventuellement séchage de la dispersion aqueuse ainsi obtenue, **caractérisé en ce que**
a) on effectue la polymérisation en présence de 0,001 à 0,02 % en poids d'amorceur, éventuellement encore 0,001 à 0,03 % en poids de réducteur, dans chaque cas par rapport au poids total des monomères, et
b) on dispose au préalable de 10 à 50 % en poids des monomères, par rapport au poids total des monomères, et on ajoute de façon réglée le reste, et
c) on ajoute de façon réglée la totalité de l'amorceur ainsi qu'éventuellement du réducteur, la quantité totale d'amorceur étant de 25 à 60 % en poids jusqu'à ce que soient écoulés 50 à 80 % du temps total de polymérisation et la quantité de réducteur étant éventuellement ajoutée en continu de façon réglée, et
d) dans le temps de polymérisation restant la quantité résiduelle d'amorceur et éventuellement de réducteur est ajoutée plus rapidement, à une vitesse d'addition au moins le double de celle utilisée dans l'étape c).

2. Procédé selon la revendication 1, **caractérisé en ce que** dans l'étape c) l'addition réglée de l'amorceur et éventuellement du réducteur s'effectue jusqu'à ce que soient écoulés 70 à 80 % du temps total de polymérisation.

3. Procédé selon la revendication 1 ou 2, **caractérisé en ce que** dans l'étape d) la quantité résiduelle d'amorceur et éventuellement de réducteur est ajoutée plus rapidement, à une vitesse 3 à 8 fois supérieure à celle utilisée dans l'étape c).

4. Procédé selon l'une quelconque des revendications 1 à 3, **caractérisé en ce que** les monomères et amorceurs de radicaux sont ajoutés de façon réglée de sorte que la conversion des monomères est
au bout de 30 minutes de temps de polymérisation, d'au maximum 70 %,
au bout de 60 minutes de temps de polymérisation, d'au maximum 75 %,
au bout de 90 minutes de temps de polymérisation, d'au maximum 80 %,
au bout de 120 minutes de temps de polymérisation, d'au maximum 85 %,
au bout de 150 minutes de temps de polymérisation, d'au maximum 88 %,
au bout de 180 minutes de temps de polymérisation, d'au maximum 90 %,
dans chaque cas par rapport à la quantité totale de monomère qui a été disposée au préalable ou ajoutée de façon réglée jusqu'à cet instant.

5. Procédé selon l'une quelconque des revendications 1 à 4, **caractérisé en ce qu'**on utilise des poly(alcool vinylique)s partiellement saponifiés ou des poly(alcool vinylique)s à modification hydrophobe, partiellement saponifiés, ayant chacun un degré d'hydrolyse de 80 à 95 % en moles et une viscosité Höppler, en solution aqueuse à 4 %, de 1 à 30 mPa.s (méthode selon Höppler à 20°C, DIN 53015) ou des mélanges de ceux-ci.

6. Procédé selon la revendication 5, **caractérisé en ce qu'**on utilise des poly(alcool vinylique)s partiellement saponifiés ayant un degré d'hydrolyse de 85 à 94 % en moles et une viscosité Höppler, en solution aqueuse à 4 %, de 3 à 15 mPa.s (méthode selon Höppler à 20°C, DIN 53015).

7. Procédé selon l'une quelconque des revendications 1 à 6, **caractérisé en ce qu'**on dispose au préalable au moins 5 % en poids de la quantité de colloïde protecteur et le reste est ajouté de façon réglée.

8. Procédé selon l'une quelconque des revendications 1 à 7, **caractérisé en ce que** le séchage de la dispersion aqueuse ainsi obtenue s'effectue par séchage par atomisation, éventuellement après addition d'autres colloïdes protecteurs en tant qu'auxiliaires de pulvérisation.

9. Utilisation des produits du procédé selon l'une quelconque des revendications 1 à 8, comme composant de formulation en relation avec des liants minéraux à prise hydraulique dans des colles pour le bâtiment, des mastics, des enduits, des enduits pour sols, des mortiers de jointoiement et des peintures.

10. Utilisation des produits du procédé selon l'une quelconque des revendications 1 à 8, en tant que liant unique pour des produits de revêtement et des adhésifs.

11. Utilisation des produits du procédé selon l'une quelconque des revendications 1 à 8, en tant que liant et produit d'enduction pour textiles et papiers.
